# EUROPEAN PATENT APPLICATION

(11) **EP 4 538 081 A1**
(43) Date of publication of application: **16.04.2025**
(21) Application number: 24205558.0
(22) Date of filing: 09.10.2024
(51) Int. Cl.: B60K 1/04

(54) **ELECTRIC AUTOMOBILE**

(30) Priority: 10.10.2023 JP 2023175055
(71) Applicant: MAZDA MOTOR CORPORATION, Hiroshima 730-8670 (JP)
(72) Inventor: Kaneko, Naoki, Aki-gun, Hiroshima, 730-8670 (JP); Mochizuki, Masanori, Aki-gun, Hiroshima, 730-8670 (JP)
(74) Representative: von Tietzen und Hennig, Nikolaus

(57) **Abstract**

An electric automobile, in which a driver's seat and an assistant driver's seat are provided in line in a vehicle width direction, comprises an assistant-driver's-seat side battery installed on a vehicle forward side of the assistant driver's seat, a motor operative to drive a driving wheel when receiving supply of electric power from the assistant-driver's-seat side battery, and a battery-moving device to move the assistant-driver's-seat side battery in a vehicle longitudinal direction and/or in the vehicle width direction.

## Description

### BACKGROUND OF THE INVENTION

The present invention relates to an electric automobile comprising a motor to drive a driving wheel and a battery to supply electric power to the motor.

In the electric automobile with the motor to drive the driving wheel, the traveling distance is greatly affected by the installation quantity of the battery to supply the electric power to the motor. In a case of an electric automobile disclosed in Japanese Patent Laid-Open Publication No. 2011-1950566, for example, a battery is installed in a tunnel portion formed at a floor panel and also below a rear seat, thereby increasing the installation quantity of the battery. Since the battery installed in the tunnel portion of the floor panel is elongated in a longitudinal direction because of a longitudinally-long shape of the tunnel portion, the size, in a vertical direction, of a front-end portion of the battery is longer than that, in the vertical direction, of a middle portion (longitudinally middle portion) of the battery. Meanwhile, since the rear seat is long in a lateral direction, the battery installed below the rear seat is designed such that it has a laterally-long shape so as to enlarge the battery volume (capacity).

Further, Japanese Patent Laid-Open Publication No. 2008-155828 discloses a structure in which a protrusion portion is formed at a portion of a floor panel which is positioned on an assistant-driver's-seat side (passenger-seat side) and a battery is arranged inside the protrusion portion.

Herein, it is important to reduce the yaw moment of inertia of the vehicle when considering the kinetic performance of the automobile, so that it will be a key issue how to reduce the yaw moment of inertia of the vehicle. Therefore, a layout of a heavy object has been an important factor in designing the automobile.

In general, there may be cases where a driver is only on the vehicle or any other passenger than the driver is also on the vehicle. For example, between a case where a passenger is seated in an assistant driver's seat in addition to the driver and another case where there is no passenger seated in the assistant driver's seat, there exists a weight difference by one person between these cases. This lateral weight difference (imbalance) of the vehicle may cause a big change in the yaw moment of inertia of the vehicle, thereby possibly affecting the kinetic performance of the vehicle.

This change of the yaw moment of inertia may be also caused by the weight difference of the drivers seated in the driver's seat, the longitudinal siting position of the driver in the seat, or the like, so that the kinetic performance of the vehicle may be affected by these factors as well.

Further, there is a case where it becomes important how to set the longitudinal weight balance or the lateral weight balance, which may affect the steering characteristics, in the traveling of the automobile, particularly in the sports-mode traveling. Moreover, some driver may want change the longitudinal weight balance or the lateral weight balance of the vehicle for the driver's own preference or adjusting to the traveling road's condition. However, if some heavy object is additionally installed in order to satisfy such needs, the vehicle weight increases improperly, so that there is a concern that the kinetic performance of the vehicle may be deteriorated.

### SUMMARY OF THE INVENTION

The present invention has been devised in view of the above-described matters, and an object of the present invention is to provide an electric automobile which can properly adjust the weight balance of the vehicle by using the battery installed on the side of the assistant-driver's-seat side of the electric automobile.

The present invention is an electric automobile, in which a driver's seat and an assistant driver's seat are provided in line in a vehicle width direction, comprising an assistant-driver's-seat side battery installed on a vehicle forward side of the assistant driver's seat, a motor operative to drive a driving wheel when receiving supply of electric power from the assistant-driver's-seat side battery, and a battery-moving device to move the assistant-driver's-seat side battery in a vehicle longitudinal direction and/or in the vehicle width direction.

According to the present invention, since the assistant-driver's-seat side battery to supply the electric power to the motor is a heavy object, the longitudinal weight balance or the lateral weight balance of the vehicle can be adjusted by moving the assistant-driver's-seat side battery by means of the battery-moving device. It becomes possible by this adjustment to properly set the weight balance depending on existence or non-existence of the passenger seated in the assistant driver's seat, the weight of the driver seated in the driver's seat, or the like. Moreover, achieving of the driver's own preference regarding the steering characteristics, setting of the weight balance according to the traveling road's condition, or the like become possible as well.

In the present invention, the electric automobile may further comprise a tunnel portion provided at a central portion, in the vehicle width direction, of a floor panel, protruding upward, and extending in the vehicle longitudinal direction and a center battery installed in the tunnel portion and operative to supply the electric power of the motor.

According to this structure, the gravity center of the vehicle can be close to the center of the vehicle by providing the center battery, prolonging the traveling distance of the vehicle, so that the yaw moment of inertia of the vehicle can be reduced.

In the present invention, the battery-moving device may comprise a load detection sensor to detect a load applied to the driver's seat by a passenger seated in the driver's seat, a calculation portion to calculate a target position of the assistant-driver's-seat side battery based on the load detected by the load detection sensor, and a moving mechanism to move the assistant-driver's-seat side battery such that the assistant-driver's-seat side battery is located at the target position calculated by the calculation portion.

According to this structure, the best (most appropriate) position of the assistant-driver's-seat side battery is automatically calculated as the target position according to the weight of the driver seated in the driver's seat. Then, the assistant-driver's-seat side battery is moved to the best position, so that the yaw moment of inertia of the vehicle can be reduced properly without any particular adjustment or operation by the driver.

In the present invention, the battery-moving device may comprise a position detection sensor to detect a position, in a vehicle longitudinal direction, of the driver's seat, a calculation portion to calculate a target position of the assistant-driver's-seat side battery based on the position detected by the position detection sensor, and a moving mechanism to move the assistant-driver's-seat side battery such that the assistant-driver's-seat side battery is located at the target position calculated by the calculation portion.

In general, since the driver's seat is configured such that its longitudinal position is adjustable, the longitudinal weight balance of the vehicle changes depending on the longitudinal direction of the driver's seat. Herein, according to the above-described structure, the best (most appropriate) position of the assistant-driver's-seat side battery is automatically calculated as the target position according to the longitudinal position of the driver's seat. Then, the assistant-driver's-seat side battery is moved to the best position, so that the yaw moment of inertia of the vehicle can be reduced properly by merely adjusting the position of the driver's seat without any particular adjustment or operation by the driver.

In the present invention, the battery-moving device may comprise a rail fixed to a floor panel and extending in the vehicle longitudinal direction or in the vehicle width direction and a movable member guided by the fixed rail in a state of engaging with the fixed rail. In this case, the assistant-driver's-seat side battery can be attached to the movable member.

According to this structure, since the assistant-driver's-seat side battery is attached to the floor panel via the movable member and the fixed rail, the installation position of the assistant-driver's-seat side battery becomes low, so that the level (height) of the gravity center of the vehicle can be properly low.

In the present invention, an upper-end portion of the assistant-driver's-seat side battery may be located at a lower level than an upper face of a front-end portion of a cushion portion of the assistant driver's seat.

According to this structure, the assistant-driver's-seat side battery may not contact easily a back face of a thigh portion of the passenger seated in the assistant driver's seat or the like, so that the comfortableness of the passenger seated in the assistant driver's seat can be improved.

In the present invention, the assistant-driver's-seat side battery unit may be arranged at a portion of a floor panel which is positioned on the forward side of a cushion portion of the assistant-driver's-seat. Preferably, the assistant-driver's-seat side battery unit may be configured such that its level in a vertical direction becomes lower from a position starting while going forward. Since the height of the upper-end portion of the assistant-driver's-seat side battery unit decreases in a direction to the front of the automobile, the assistant-driver's-seat side battery unit may not contact easily a back face of the thigh portion of the passenger seated in the assistant driver's seat when the passenger naturally stretches the passenger's legs.

In particular, the assistant-driver's-seat side battery unit may include a plurality of batteries, for instance a front-side battery and a rear-side battery with their longitudinal directions match the vehicle width direction. Also, the front-side battery and the rear-side battery are arranged in line in the longitudinal direction. The front-side battery may be a one-stack (step) battery, and the rear-side battery may be a two-stack (step) battery.

In the present invention, the moving mechanism may comprise a longitudinal drive portion and/or a lateral drive portion to move the assistant-driver's-seat side battery unit in a longitudinal direction and/or in a width direction of the automobile. Said drive portion preferably being a direct-move actuator, such as an electromotive screw mechanism.

In the present invention, the calculation portion as mentioned before may be further configured to calculate a target position such that the larger the load detected by the load detection sensor is, the further the target position of the assistant-driver's-seat side battery unit is away from the driver's seat in the lateral direction and/or the longitudinal direction of the automobile. Thereby, the weight balance may be automatically adjusted dependent on the drivers weight.

In the present invention, the battery-moving device may further comprise a position adjusting switch by which a driver is able to input a desired target position of the assistant-driver's-seat side battery unit, the battery-moving device may further comprise a moving mechanism adapted to move the assistant-driver's-seat side battery unit such that the assistant-driver's-seat side battery unit is located at the desired target position inputted by the driver.

The present invention will become apparent from the following description which refers to the accompanying drawings.

### BRIEF DESCRIPTION OF THE DRAWINGS

FIG. **1** is a left-side view of an electric automobile according to an embodiment of the present invention.
FIG. **2** is a plan view of the electric automobile according to the embodiment of the present invention.
FIG. **3** is a plan view showing a cabin in a state where a roof, a door, an interior material and others of the electric automobile are omitted.
FIG. **4** is a sectional view taken along line IV-IV of FIG. **3****.**
FIG. **5** is a sectional view taken along line V-V of FIG. **3****.**
FIG. **6** is a perspective view showing a battery unit installed on a vehicle body only.
FIG. **7** is a block diagram of a battery-moving device.
FIG. **8** is a plan view of a moving mechanism.
FIG. **9** is a block diagram according to a modification, which corresponds to FIG. **7****.**

### DETAILED DESCRIPTION OF THE INVENTION

Hereafter, an embodiment of the present invention will be described specifically referring to the drawings. Herein, the embodiment described below is just an exemplified one of the present invention, and therefore it does not to intend to restrict any application or use of the present invention.

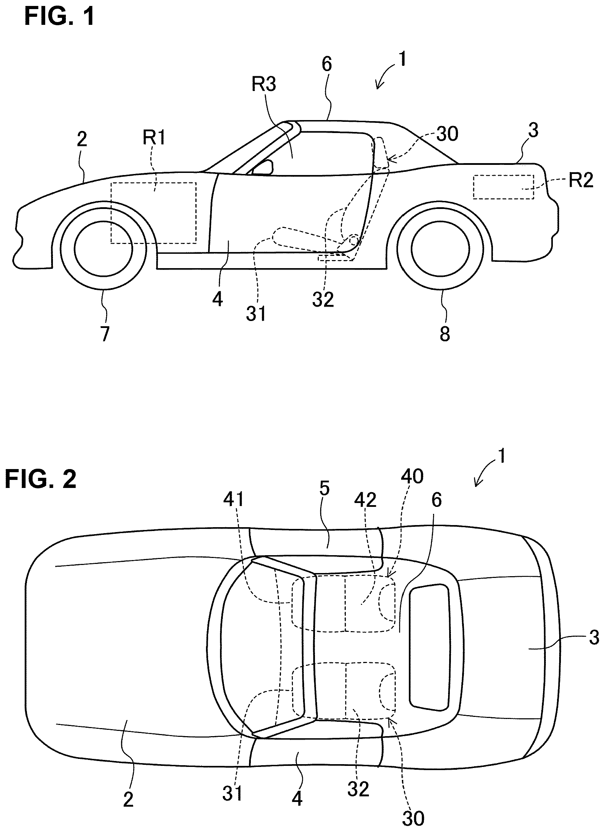

FIGS. **1** and **2** respectively show an exterior of an electric automobile **1** which is provided with a vehicle-body structure **A** according to the embodiment of the present invention. In the description of the present embodiment, a vehicle forward side will be just referred to as the "front (forward) side," a vehicle rearward side will be just referred to as the "rear (rearward) side," a vehicle leftward side will be just referred to as the "left (leftward) side," and a vehicle leftward side will be just referred to as the "left (left) side." A lateral direction of the vehicle corresponds to (matches) a vehicle with direction. A side view of the vehicle means a view of the vehicle when the electric automobile 1 is viewed from the left side or the right side. Further, a view of the vehicle when the electric automobile **1** is viewed from an upper side means a top view or a plan view of the vehicle.

The electric automobile **1** is a passenger car, for example, and may be any type of vehicle, such as a coupe type, a hatch-back type, or a sedan type. The electric automobile **1** has a hood (bonnet hood) **2** at its front side. A front-side baggage loading space **R1** where baggage can be loaded (illustrated by a broken line in FIG. **1** only) is provided below the hood **2.** The front-side baggage loading space **R1** is opened by opening the hood **2,** so that the baggage can be loaded or unloaded.

A rear hood **3** is provided at a rear side of the electric automobile **1.** Below the rear hood **3** is provided a rear-side baggage loading space **R2** where baggage can be loaded (illustrated by a broken line in FIG. **1** only). The rear-side baggage loading space **R2** is opened by opening the rear hood **3,** so that the baggage can be loaded or unloaded. Herein, either one or both of the front-side baggage loading space **R1** and the rear-side baggage loading space **R2** may be set as a space for arranging an auxiliary device therein.

A left-side door **4** and a right-side door **5** are provided to be openable at a left-side portion and a right-side portion of the electric automobile **1.** The roof **6** may be a fixed type, a detachable type, or a foldable type. In a case of the detachable type of the holdable type, the vehicle is an open car with no top above a passenger.

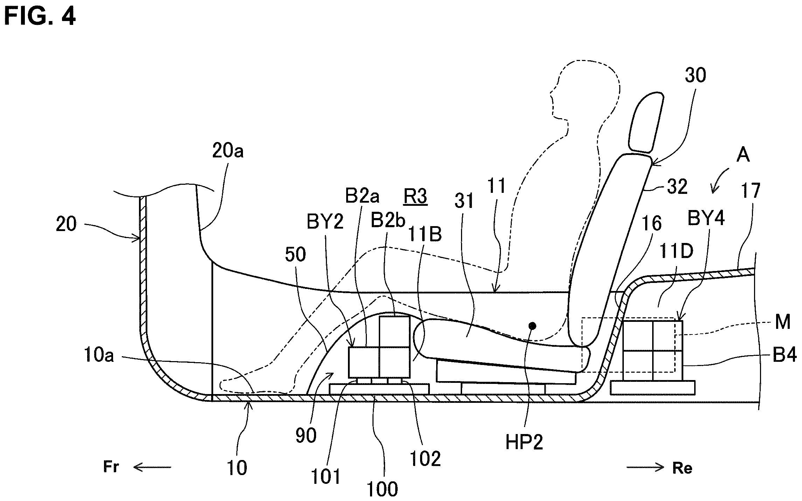

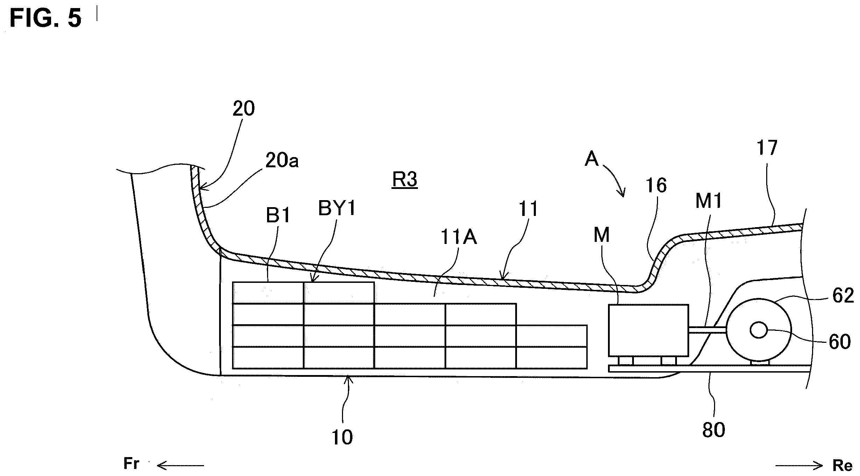

The vehicle-body structure **A** of the electric automobile **1** is equipped with front wheels **7** and rear wheels **8,** and a motor **M** for driving the rear wheels **8** (shown in FIGS. **4** and **5** and hereafter, referred to as the "motor **M**" simply) is provided. An inverter circuit and various sensors which are necessary for controlling the motor **M**, devices for driving operation, and others can be used from any conventionally well-known ones.

While the rear wheel **8** is the driving wheel in the present embodiment, the front wheel **7** may be set as the driving wheel, or both of those 7, 8 may be set as the driving wheels. That depends on how the motor **M** is arranged. That is, in a case where the motor **M** is installed at the rear side of the vehicle only, the rear wheel **8** can be the driving wheel, and also in a case where the motor **M** is installed at the front side of the vehicle only, the front wheel **7** can be the driving wheel. Further, in a case where the plural motors **M** are installed at the front side and the rear side of the vehicle, the both of the wheels **7, 8** can be the driving wheel. Hereinafter, the case where the motor **M** is installed at the rear side of the vehicle only will be described.

As shown in FIG. **1****,** a cabin **R3** as a space for passengers is provided between the front wheels **7** and the rear wheels **8.** As shown in FIG. **4****,** the vehicle-body structure **A** of the electric automobile **1** comprises a floor panel **10** which forms a floor face of the cabin **R3** and a dash panel **20** which forms a front wall of the cabin **R3.** Further, the vehicle-body structure **A** comprises an inclined panel **16** which extends obliquely upward-and-rearward from a rear-end portion of the floor panel and a rear panel **17** which extends rearward from an upper-end portion of the inclined panel **16.**

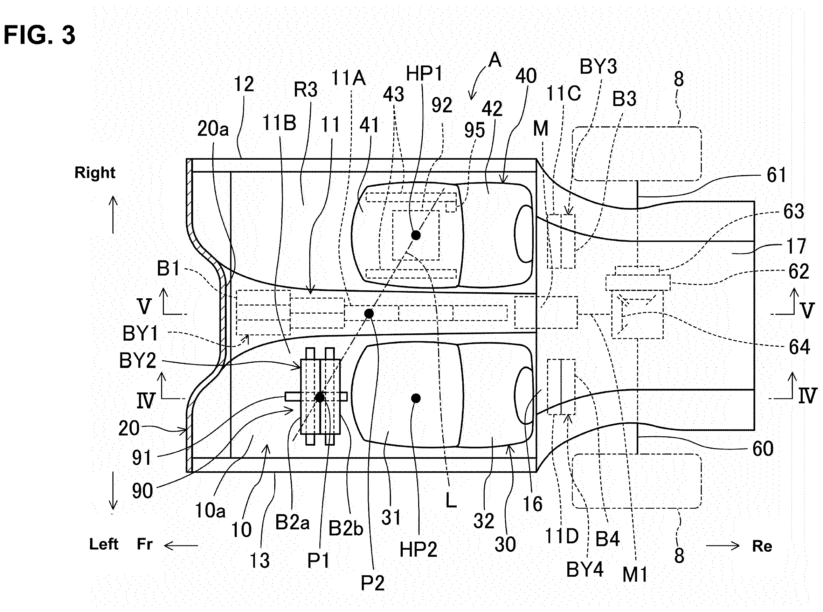

A tunnel portion **11** which protrudes upward and extends in a longitudinal direction is formed at a central portion, in a vehicle width direction, of the floor panel **10.** Respective cabin-side faces of the tunnel portion **11,** the floor panel **10,** and the dash panel **20** are covered with an interior material, not illustrated. As shown in FIG. **3****,** the vehicle-body structure **A** further comprises a right-side side sill **12** which extends in the longitudinal direction along a right edge portion of the floor panel **10** and a left-side side sill **13** which extends in the longitudinal direction along a left edge portion of the floor panel **10.**

A front-end portion of the tunnel portion **11** is positioned at a front-end portion of the floor panel **10,** and a rear-end portion of the tunnel portion **11** is positioned at a rear-end portion of the floor panel **10.** Accordingly, the tunnel portion **11** is continuous from the front-end portion to the rear end of the floor panel **10.**

This electric automobile **1** is right-hand drive. Therefore, the vehicle-body structure **A** is equipped with an assistant driver's seat **30** as a left-side seat and a driver's seat **40** as a right-side seat, which are respectively provided on a left side and a right side of the tunnel portion **11** formed at the floor panel **10.** Specifically, the assistant driver's seat **30** is arranged on the left side of the tunnel portion **11** at the floor panel **10,** and this assistant driver's seat **30** is disposed between the tunnel portion **11** and the left-side side sill **13.** The driver's seat **40** is arranged on the right side of the tunnel portion **11** at the floor panel **10,** and this driver's seat **40** is disposed between the tunnel portion **11** and the right-side side sill **12.** Accordingly, the assistant driver's seat **30** and the driver's seat **40** are provided side by side in the vehicle width direction, interposing the tunnel portion **11** therebetween. Herein, the electric automobile **1** may be left-hand drive, and in this case, the driver's seat **40** may be provided at the left side and the assistant driver's seat **30** may be provided at the right side. Further, a rear seat may be provided as well.

The driver's seat **40** comprises a cushion portion **41** which mainly supports a buttock portion and a thigh portion of the passenger and a back portion **42** which extends upward from a rear end portion of the cushion portion **41** and mainly supports a waist portion, a back portion, and shoulder portions of the passenger. The cushion portion **41** forms a sitting face of the driver's seat **40.** The cushion portion **41** is attached to the floor panel **10** via a slide mechanism **43** (shown in FIG. **3** only), which is not indispensable. A slide mechanism **43** is a mechanism to position (fix) the driver's seat **40** at any needed position by moving the driver's seat **40** in the longitudinal direction. This slide mechanism **43** is well known.

Likewise, the assistant driver's seat **30** comprises a cushion portion **31** and a back portion **32.** In FIG. **3****,** a hip point of the passenger seated in the driver's seat **40** is denoted by a reference character **HP1,** and a hip point of the passenger seated in the assistant driver's seat **30** is denoted by a reference character **HP2.** Herein, while it is assumed that the passenger seated has a standard body size and weight, each position of the hip points **HP1, HP2** does not move so much even when the body size and weight of the passenger changes. In FIG. **4****,** the hip point of the passenger seated in the assistant driver's seat **30** is denoted by the reference character **HP2.**

Herein, in a case where the driver's seat **40** is attached to the floor panel **10** such that it is slidable in the longitudinal, the hip point **HP1** moves in the longitudinal direction according to its slide position. However, the hip point **HP1** where the driver's seat **40** is located at a position where the passenger with the standard body size can take a standard driving position can be made standard. The hip point **HP2** on the assistant-driver's-seat **30** side is the same as well. The assistant driver's seat **30** may be fixedly attached to the floor panel **10** without being slidable in the longitudinal direction.

An upper end portion of the tunnel portion **11** is located at a higher level than each upper face of the cushion portions **31, 41.** Thereby, a installation space where a center battery unit **BY1** described later is installed in the tunnel portion **11** can be securely expanded in a height direction.

As shown in FIGS. **4** and **5****,** the protrusion height of the tunnel portion **11** from the level of the floor panel **10** (the protrusion height from the level of a portion where the assistant driver's seat **30** and the river's seat **40** are attached) becomes higher while going vehicle forward. Accordingly, the upper end portion of the tunnel portion **11** is inclined gently such that its rear side becomes low. The assistant driver's seat **30** and the driver's seat **40** are positioned beside a rear-side portion of the tunnel portion **11,** and the rear-side portion of the tunnel portion **11** overlaps the assistant driver's seat **30** and the driver's seat **40** in a side view. Since the height of the overlapping portion of the tunnel portion **11** with the assistant driver's seat **30** and the driver's seat **40** in the side view becomes low, it becomes possible that the passenger (driver) seated in the driver's seat **40** moves onto the assistant driver's seat **30** beyond the tunnel portion **11,** or the passenger seated in the assistant driver's seat **30** moves onto the driver's seat **40** beyond the tunnel portion **11.**

Further, as shown in FIG. **3****,** the width (lateral size) of the tunnel portion **11** becomes wider while going forward. Specifically, the distance between the left-side wall and the right-side wall of the tunnel portion **11** becomes narrower while going rearward, and the width of the rear-side portion of the tunnel portion **11** is narrower than that of a front-side portion of the tunnel portion **11.** Since the width of the overlapping portion of the tunnel portion **11** with the assistant driver's seat **30** and the driver's seat **40** in the side view is narrow, the sufficient width of each of the assistant driver's seat **30** and the driver's seat **40** can be secured, suppressing the vehicle width from being improperly wide.

Herein, since the front portion of the tunnel portion **11** is a portion which does not overlap the assistant driver's seat **30** and the driver's seat **40** in the side view, there is no problem in securing the width of the assistant driver's seat **30** and the driver's seat **40** by enlarging the width of the front portion of the tunnel portion **11.**

The dash panel **20** extends upward and in the vehicle width direction from the front-end portion of the floor panel **10,** and is a member to partition the cabin **R3** from its font-side space. A protrusion portion **20a** which protrudes toward an inside of the cabin **R3** is provided at a central portion, in the vehicle width direction, of the dash panel **20.** As shown in FIG. **5****,** a lower-end portion of the protrusion portion **20a** is continuous to the front-end portion of the tunnel portion **11.**

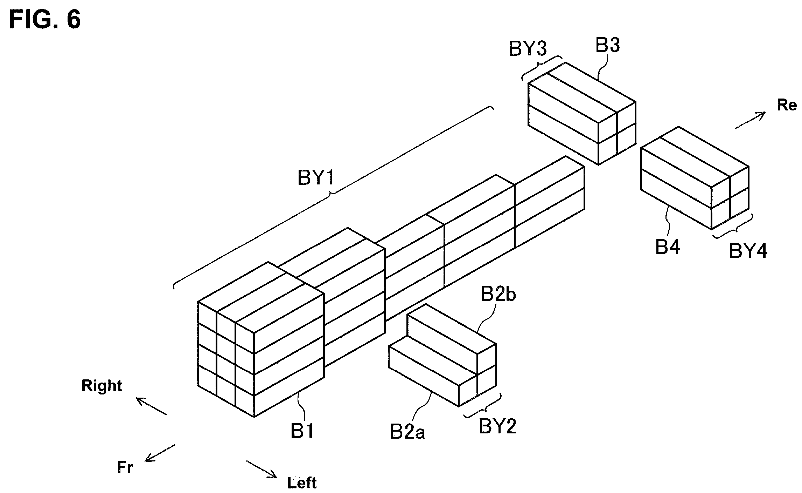

As shown in FIGS. **3 - 6****,** the vehicle-body structure **A** comprises the center battery unit **BY1,** an assistant-driver's-seat side battery unit **BY2,** a rear-right side battery unit **BY3,** and a rear-left side battery unit **BY4.** In the present embodiment, the plural battery units **BY1 - BY4** are arranged at various portions of a vehicle body, so that the installation quantity (volume, capacity) of the battery can be increased by utilizing plural spaces formed at the various portions of the vehicle body.

The center battery unit **BY1** is installed in the tunnel portion **11.** In the tunnel **11,** a center-battery arrangement portion **11A** to install the center battery unit **BY1** is provided to extend in the longitudinal direction, and the center battery unit **BY1** arranged at the center-battery arrangement portion **11A** is detachably attached to the floor panel **10** or the like (in a replaceable manner). A front-end portion of the center battery unit **BY1** in its fixed state to the floor panel **10** or the like is positioned on a rearward side of the dash panel **20.** Thereby, any battery as a heavy object does not exist at the front-side portion of the vehicle.

The center battery unit **BY1** includes plural batteries (center batteries) **B1** which are provided in line along the longitudinal direction, and these batteries **B1** supply electric power to the motor **M.** The motor **M** drives the rear wheels **8** by receiving the electric power from the center battery unit **BY1.** The center battery unit **BY1** may comprise a battery case to install the center batteries **B1,** a sensor to detect the temperature of the center batteries **B1,** a heat exchanger to adjust the temperature of the center batteries **B1,** and others, which are not illustrated.

The center battery **B1** is made of a chargeable/dischargeable secondary battery (battery cell) or the like. However, this battery **B1** may be made of a lithium-ion battery, a solid-state battery, or the like. Any other secondary battery is applicable. The center battery **B1** may be a so-called battery cell or a battery pack to store battery cells. While the drawings illustrate the center battery **B1** in a rectangular-parallelepiped shape, but this is not limited to this shape. Further, the center batteries **B1** are all the same.

The motor **M** drives the rear wheels **8,** and therefore it is provided at a rear side of the vehicle body, specifically, on the rearward side of the center battery unit **BY1.** The center battery unit **BY1** is configured such that its weight becomes heavier while being separated from the motor **M**, i.e., while going forward. For example, as shown in FIG. **3****,** the center battery unit **BY1** is configured such that its width (its lateral size), in the top view, becomes wider while being separated from the motor **M.** Specifically, the center batteries **B1** constituting the center battery unit **BY1** are disposed in line in the vehicle longitudinal direction which corresponds to (match) a batteries' longitudinal direction. The foremost-positioned center batteries **B1** are arranged such that three of batteries are in line in the vehicle width direction. The second-positioned center batteries **B1** are arranged such that two of batteries are in line in the vehicle width direction. The third-positioned, fourth-positioned, and rearmost-positioned center batteries **B1** are respectively arranged such that a single line of batteries extends in the longitudinal direction. That is, those batteries **B1** are not in line in the vehicle width direction.

Further, the center battery unit **BY1** is configured such that the size, in a vertical direction, thereof becomes longer while being separated from the motor **M.** As shown in FIG. **5****,** the foremost-positioned center batteries **B1** and the second-positioned center batteries **B1** are arranged such that four of batteries are in line in the vehicle direction. The third-positioned center batteries **B1** and the fourth-positioned center batteries **B1** are arranged such that three of batteries are in line in the vehicle direction. The rearmost-positioned center batteries **B1** are arranged such that two of batteries are in line in the vehicle direction. The number of the center batteries **B1** stacked in the vertical direction can be also called a stack number or a step number.

That is, the center batteries **B1** are arranged such that the width of the center battery unit **BY1** becomes wider while being separated from the motor **M** and, that the size, in the vertical direction, of the center battery unit **BY1** becomes longer while being separated from the motor **M.** Accordingly, the front-end portion of the center battery unit **BY1** is the heaviest and a rear-end portion of the center battery unit **BY1** is the lightest. A middle portion, in the longitudinal direction, of the center battery unit **BY1** has a middle weight between the weight of the front-end portion and the weight of the rear-end portion.

The assistant driver's seat **30** and the driver's seat **40** are positioned beside the third-positioned, fourth-positioned and rearmost-positioned center batteries **B1** of the center battery unit **BY1.** Meanwhile, the foremost-positioned and second-positioned center batteries **B1** of the center battery unit **BY1** are arranged on the forward side of the assistant driver's seat **30** and the driver's seat **40.** That is, since the center batteries **B1** of the center battery unit **BY1** are not arranged in line in the vehicle width direction between the assistant driver's seat **30** and the driver's seat **40,** the width of the portion of the center battery unit **BY1** where the center batteries **B1** are not arranged in line is set to be narrower than that of the portion of the center battery unit **BY1** which is positioned on the forward side of the assistant driver's seat **30** and the driver's seat **40.** The width of the center battery unit **BY1** becomes narrower while going rearward, corresponding to the width of the tunnel portion **11.**

Further, the stack (step) number of the foremost-positioned and second-positioned center batteries **B1** of the center battery unit **BY1** is the most, the stack (step) number of the third-positioned and fourth-positioned center batteries **B1** is fewer, and the stack (step) number of the rearmost-positioned center batteries **B1** is the fewest. Thereby, the center battery unit **BY1** is configured such that its height becomes higher while going forward, corresponding to the protrusion height of the tunnel portion **11.**

The number, the longitudinally-arranged number, and the stack number of the center batteries **B1** constituting the center battery unit **BY1** are not limited to the above-described ones, and any number is applicable. That is, as long as those numbers of the center batteries **B1** are appropriately set such that the battery unit **BY1** becomes heavier while being separated from the motor **M**, any number more than two (including two) is applicable as the longitudinally-arranged number and also any number more than one (including one) is applicable as the stack number.

The assistant-driver's-seat side battery unit **BY2** is arranged at a portion of the floor panel **10** which is positioned on the forward side of the cushion portion **31** of the assistant driver's seat **30.** The assistant-driver's-seat side battery arrangement portion **11B** where the assistant-driver's-seat side battery unit **BY2** is arranged is provided on the forward side of the assistant driver's seat **30.** Specifically, the assistant-driver's-seat side battery unit **BY2** is arranged at a rear-side portion of the floor panel **10** which is positioned on the assistant-driver's-seat side, whereas a front-side portion of the floor panel **10** which is positioned on the assistant-driver's-seat side is set as a foot-placement portion **10a** where feet of the passenger seated in the assistant driver's seat **30** are placed. The passenger having the standard body size seems not to place the passenger's feet just before the cushion portion **31** of the assistant driver's seat, but this passenger tends to place the feet forward away from the cushion portion **31,** stretching the passenger's legs. In the present embodiment, since the assistant-driver's-seat side battery unit **BY2** does not exist at the portion forward away from the cushion portion **31** and also the foot-placement portion **10a** is provided, the comfortableness of the passenger seated in the assistant driver's seat **30** can be improved, installing the batteries **B2** on the side of the assistant driver's seat **30.**

The vehicle-body structure **A** comprises a battery-moving device **90** to move the assistant-driver's-seat side battery unit **BY2** in the longitudinal direction and/or in the vehicle width direction. Details of this battery-moving device **90** will be described later.

A positional relationship of the assistant-driver's-seat side battery unit **BY2** and the hip point **HP1** of the passenger seated in the driver's seat **40** will be described. While the assistant-driver's-seat side battery unit **BY2** is moved in the longitudinal direction and/or in the vehicle width direction by the battery-moving device **90,** the following description presupposes that the assistant-driver's-seat side battery unit **BY2** is positioned at a center, in the longitudinal direction, of a moving range and also at a center, in the vehicle width direction, of the moving range. The assistant-driver's-seat side battery unit **BY2** located at these centers of the moving range is positioned on the forward side of the hip point **HP1** of the passenger seated in the driver's seat **40.** In FIG. **3****,** the gravity center of the assistant-driver's-seat side battery unit **BY2** is denoted by a reference character **P1,** whereas the center of the vehicle (in the longitudinal direction and in the width direction) is denoted by a reference character **P2.** In the plan (top) view, the hip point **HP1** of the passenger seated in the driver's seat **40,** the vehicle center **(P2),** and the gravity center **(P1)** of the assistant-driver's-seat side battery unit **BY2** are positioned on an identical liner (straight) line (illustrated by an imaginary line **L).** This imaginary line **L** is inclined, in the plan view, such that its rear side is located on the side of the driver's seat **40.**

The assistant-driver's-seat side battery unit **BY2** includes plural batteries **B2a, B2b** like the center batteries **B1** which constitutes the center battery unit **BY1.** These batteries **B2a, B2b** are also operative to supply the electric power to the motor **M.** The assistant-driver's-seat side battery unit **BY2** may comprise a battery case, a sensor to detect the temperature of the batteries **B2a, B2b,** a heat exchanger to adjust the temperature of the batteries **B2a, B2b,** and others. An upper-end portion of the assistant-driver's-seat side battery unit **BY2** is located at a lower level than an upper face of the front-end portion of the cushion portion **31** of the assistant driver's seat **30.** The assistant-driver's-seat side battery unit **BY2** is configured such that its level becomes lower while going forward. Specifically, these two batteries **B2a, B2b** in a state where their longitudinal directions match the vehicle width direction are arranged in line in the longitudinal direction, which include the front-side battery **B2a** and the rear-side battery **B2b.** The front-side battery **B2a** is the one-stack (step) battery, and the rear-side battery **B2b** is the two-stack (step) battery. Since the height of the upper-end portion of the front-side battery **B2a** is low, the assistant-driver's-seat side battery unit **BY2** may not contact easily a back face of the thigh portion of the passenger seated in the assistant driver's seat **30** when the passenger naturally stretches the passenger's legs. Thereby, the comfortableness of the passenger seated in the assistant driver's seat **30** can be improved.

The front-side battery **B2a** and the rear-side battery **B2b** are covered with a battery cover **50** (shown in FIG. **4** only). The battery cover **50** may be made of a soft material, such as cloth or synthetic leather, or a hard resign material. The battery cover **50** may be a member which constitutes part of the assistant-driver's-seat side battery unit **BY2.**

The number, the longitudinally-arranged number, and the stack number of the batteries **B2a, B2b** constituting the assistant-driver's-seat side battery unit **BY2** are not limited to the above-described ones, and any number is applicable. That is, as long as those numbers of the batteries **B2a, B2b** are appropriately set such that the height of the assistant-driver's-seat side battery unit **BY2** becomes lower while going forward, any number more than two (including two) is applicable as the longitudinally-arranged number and also any number more than one (including one) is applicable as the stack number. The batteries **B2a, B2b** may be positioned such that its longitudinal direction matches the vehicle width direction or the vehicle longitudinal direction. Further, the front-side battery **B2a** and the rear-side battery **B2b** may have the same stack (step) number.

As shown in FIGS. **3** and **5****,** the motor **M** is attached to a subframe **80** which is provided below a rear portion of the vehicle body, and it is arranged below the inclined panel **16** and the rear panel **17** at a middle portion, in the vehicle width direction, of the vehicle body. The motor **M** is arranged such that its output shaft **M1** extends in the longitudinal direction. In the present embodiment, the output shaft **M1** of the motor **M** projects rearward. A front-side portion of the motor **M** is arranged in the tunnel portion **11.** Thus, since the installation position of the motor **M** is set to be as forward as possible, the motor **M** is arranged such that it overlaps at least part of the back portion **32** of the assistant driver's seat **30** in the side view shown in FIG. **4****.** In the side view, for example, the motor **M** can be arranged such that a lower-side portion of the back portion **32** and the front-side portion of the motor **M** overlap each other. Thereby, the motor **M** can be positioned near the center of the vehicle.

The vehicle-body structure **A** comprises a left-side drive shaft **60** and a right-side drive shaft **61** which are provided in back of the tunnel portion **11** formed at the floor panel **10** and transmit a rotational force of the motor **M** to the rear wheels **8** as the driving wheels. The left-side drive shaft **60** and the right-side drive shaft **61** extend in the vehicle width direction. The motor **M** is provided between the tunnel portion **11** and the left-side and right-side drive shafts **60, 61.** Accordingly, the motor **M** is arranged closer to the central portion, in the longitudinal direction, of the vehicle than the drive shafts **60, 61.** Herein, in a case where the motor is provided at the front side and drive the front wheels **7,** which is not illustrated, the left-side and right-side drive shafts can be provided in front of the tunnel portion **11.**

The vehicle-body structure **A** further comprises a transmission **62** and a deferential gear box **63.** The transmission **62** and the deferential gear box **63** are attached to the sub frame **80.** The transmission **62** and the deferential gear box **63** are arranged behind the motor **M** and on the side of the driver's seat **40** at the vehicle body. The rotational force of the output shaft **M1** of the motor **M** is inputted to the transmission **62** via a gear **64.** The rotational force of the output shaft **M1** extending in the longitudinal direction is transferred to a rotational force around an axis extending in the vehicle width direction and inputted to the transmission **62.** The transmission **62** is a speed-changing gear or a speed-reducing gear. In a case where the transmission **62** is the speed-changing gear, it may be a stepped transmission or a non-stage transmission. The transmission **62** and the deferential gear box **63** may be integrated, or gears to constitute a transmission and gears to constitute a deferential mechanism may be installed in a single gear box. The motor **M** and the transmission **62** may be modularized. Herein, in a case where the motor **M** is provided at the front side of the vehicle body and drives the front wheels **7,** the transmission **62** and the deferential gear box **63** can be provided in front of the tunnel portion **11,** which is not illustrated.

The rotational force of the motor **M** which is outputted from the transmission **62** is transferred to the right-and-left rear wheels **8** via a deferential mechanism (not illustrated) stored in the deferential gear box **63** and the drive shafts **60, 61.**

As shown in FIG. **3****,** the rear-right side battery unit **BY3** is provided behind the driver's seat **40.** The inclined panel **16** is positioned in back of the driver's seat **40,** and a rear-right side battery arrangement portion **11C** where the rear-right side battery unit **BY3** can be arranged is provided in back of the inclined panel **16** (outside the cabin **R3).** The rear-right side battery unit **BY3** comprises plural rear-right side batteries **B3** like the center batteries **B1** constituting the center battery unit **BY1.** The rear-right side batteries **B3** are operative to supply the electric power to the motor **M** as well. The rear-right side battery unit **BY3** may comprise a battery case, a sensor to detect the temperature of the rear-right side batteries **B3,** a heat exchanger to adjust the temperature of the rear-right side batteries **B3,** and others.

Further, the rear-left side battery unit **BY4** is provided behind the assistant driver's seat **30.** The inclined panel **16** is positioned in back of the assistant driver's seat **30,** and a rear-left side battery arrangement portion **11D** where the rear-left side battery unit **BY4** can be arranged is provided in back of the inclined panel **16** (outside the cabin **R3).** The rear-left side battery unit **BY4** comprises plural rear-left side batteries **B4** like the center batteries **B1** constituting the center battery unit **BY1.** The rear-left side batteries **B4** are operative to supply the electric power to the motor **M** as well. The rear-left side battery unit **BY4** may comprise a battery case, a sensor to detect the temperature of the rear-left side batteries **B4,** a heat exchanger to adjust the temperature of the rear-left side batteries **B4,** and others.

The rear-right side battery arrangement portion **11C** and the rear-left side battery arrangement portion **11D** are provided relatively on the forward side of the transmission **62.** The rear-right side battery arrangement portion **11C** and the rear-left side battery arrangement portion **11D** are further provided on the both sides, in the vehicle width direction, of the motor **M.** That is, the motor **M** is arranged between the rear-right side batteries **B3** and the rear-left side batteries **B4,** and also provided such that at least part of the rear-right side batteries **B3** and the rear-left side batteries **B4** overlap the motor **M** in the side view. Since the rear-right side batteries **B3** and the rear-left side batteries **B4** are provided at the both sides, in the vehicle width direction, of the motor **M**, respectively, these can be called side batteries.

The number, the longitudinally-arranged number, and the stack number of the rear-right side batteries **B3** constituting the rear-right side battery unit **BY3** can be set arbitrarily. Further, the number, the longitudinally-arranged number, and the stack number of the rear-left side batteries **B4** constituting the rear-left side battery unit **BY4** can be set arbitrarily as well. The rear-right side batteries **B3** and the rear-left side batteries **B4** may be arranged such that their longitudinal direction match the vehicle width direction or the longitudinal direction. Further, the rear-right side battery unit **BY3** and the rear-left side battery unit **BY4** may be detachable.

### (Details of Battery-Moving Device)

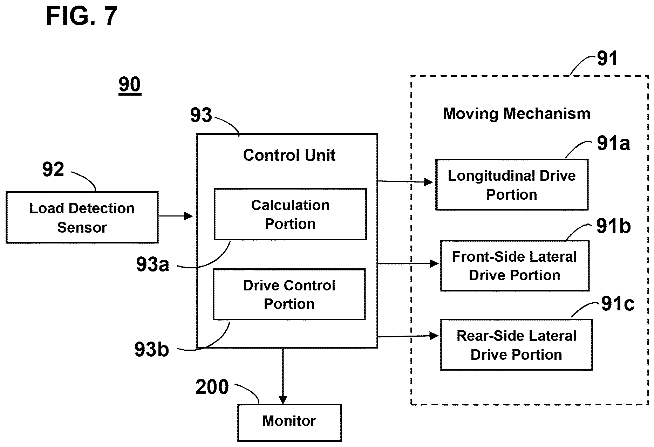

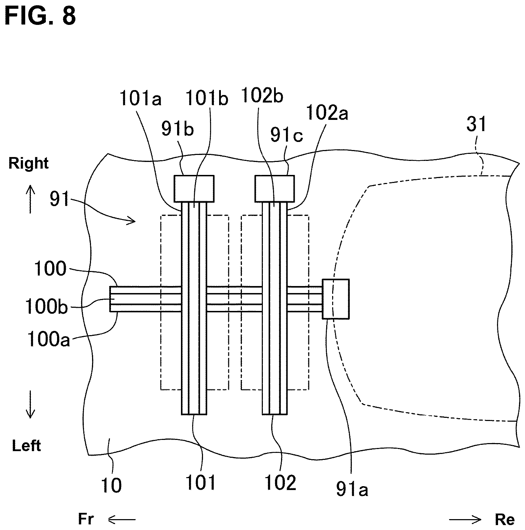

As shown in FIG. **7****,** the battery-moving device **90** comprises a moving mechanism **91** to move the batteries **B2a, B2b** of the assistant-driver's-seat side battery unit **BY2** in the longitudinal direction and/or in the vehicle width direction, a load detection sensor **92,** and a control unit **93.** The details of the moving mechanism **91** will be described referring to FIG. **8** first.

The moving mechanism **91** comprises a longitudinal guide portion **100** to guide the batteries **B2a, B2b** in the longitudinal direction, a front-side lateral guide portion **101** to guide the front-side battery **B2a** in the lateral direction, and a rear-side lateral guide portion **102** to guide the rear-side battery **B2b** in the lateral direction. The longitudinal guide portion **100** comprises a fixed **rail 100a** which is fixed to the floor panel **10** and extends in the longitudinal direction and a movable member **100b** which is guided in the longitudinal direction by the fixed rail **100a** in a state of engaging with the fixed rail **100a.** The movable member **100b** is configured not to be movable in the vertical direction and in the lateral direction, relative to the fixed rail **100a.** The number of the longitudinal guide portion **100** may be two or more.

The front-side guide portion **101** comprises a front-side rail **101a** which is fixed to the movable member **100b** of the longitudinal guide portion **100** and extends in the lateral direction and a front-side movable member **101b** which is guided in the lateral direction by the front-side rails **101a** in a state of engaging with the front-side rail **101a.** The front-side movable member **101b** is configured not to be movable in the vertical direction and in the longitudinal direction, relative to the front-side rail**101a.**

The rear-side guide portion **102** comprises a rear-side rail **102a** which is fixed to the movable member **100b** of the longitudinal guide portion **100** and extends in the lateral direction and a rear-side movable member **102b** which is guided in the lateral direction by the rear-side rails **102a** in a state of engaging with the rear-side rail **102a.** The rear-side movable member **102b** is configured not to be movable in the vertical direction and in the longitudinal direction, relative to the rear-side rail**102a.**

The front-side battery **B2a** is attached to the front-side movable member **101b.** The rear-side battery **B2b** is attached to the rear-side movable member **102b.** That is, since the front-side battery **B2a** and the rear-side battery **B2b** are attached to the movable member **100b** via the front-side lateral guide portion **101** and the rear-side lateral guide portion **102,** respectively, these batteries **B2a, B2b** can be moved in the longitudinal direction by the longitudinal guide portion **100.** Meanwhile, regarding the lateral direction, the front-side battery **B2a** can be moved by the front-side lateral guide portion **101** and the rear-side battery **B2b** can be moved by the rear-side lateral guide portion **102.** Accordingly, the front-side battery **B2a** and the rear-side battery **B2b** can be moved separately.

Herein, the front-side battery **B2a** and the rear-side battery **B2b** may be movable together in the lateral direction. Further, the longitudinal guide portion **100** may be provided only, and the front-side battery **B2a** and the rear-side battery **B2b** may be movable in the longitudinal direction only, which are not illustrated. Moreover, the lateral guide portion may be provided only, and the front-side battery **B2a** and the rear-side battery **B2b** may be movable in the lateral direction only, which are not illustrated. In a case where the front-side battery **B2a** and the rear-side battery **B2b** are configured to be movable in the lateral direction only, the guide portion is configured to comprise a fixed rail which is fixed to the floor panel **10** and extends in the vehicle width direction and a movable member which is guided in the vehicle width direction by this fixed rail in a state of engaging with this fixed rail, and the front-side battery **B2a** and the rear-side battery **B2b** are fixed to this movable member.

As shown in FIG. **7****,** the moving mechanism **91** comprises a longitudinal drive portion **91a,** a front-side lateral drive portion **91b,** and a rear-side lateral drive portion **91c.** The longitudinal drive portion **91a,** the front-side lateral drive portion **91b,** and the rear-side lateral drive portion **91c** are configured by a direct-move actuator, such as an electromotive screw mechanism, respectively. The longitudinal drive portion **91a** is the one to drive the movable member **100b** of the longitudinal guide portion **100** in the longitudinal direction. The front-side lateral drive portion **91b** is the one to drive the front-side movable member **101b** of the front-side lateral guide portion **101** in the lateral direction. The rear-side lateral drive portion **91c** is the one to drive the rear-side movable member **102b** of the rear-side lateral guide portion **102** in the lateral direction.

The load detection sensor **92** is the one to detect a load applied to the driver's seat **40** by the passenger seated in the driver's seat **40.** Specifically, that can be configured by a pressure sensor installed in the cushion portion **41** of the driver's seat **40** or the like. When the driver is seated in the driver's seat **40,** the load related to the weight of the driver is applied downward to the load detection sensor **92.** This load is detected by the load detection sensor **92,** so that the driver's weight can be assumed.

The control unit **93** is configured by a microcomputer or the like, which is operated by a previously-memorized program. The control unit **93** comprises a calculation portion **93a** and a drive control portion **93b.** The calculation portion **93a** is the one to obtain the load detected by the load detection sensor **92** and calculate respective target positions of the batteries **B2a, B2b** based on the obtained load. In a case where the target position is calculated, the weight of the batteries **B2a, B2b** are considered as well, for example. For example, the target position is calculated such that the larger the load detected by the load detection sensor **92** is, the further the target positions of the batteries **B2a, B2b** are away from the driver's seat **40** in the lateral direction. On the contrary, the target position is calculated such that the smaller the load detected by the load detection sensor **92** is, the closer the target positions of the batteries **B2a, B2b** are to the driver's seat **40** in the lateral direction. Thereby, the lateral weight balance of the vehicle body can be improved.

Further, the target position is calculated such that the larger the load detected by the load detection sensor **92** is, the further the target positions of the batteries **B2a, B2b** are away from the driver's seat **40** in the longitudinal direction. On the contrary, the target position is calculated such that the smaller the load detected by the load detection sensor **92** is, the closer the target positions of the batteries **B2a, B2b** are to the driver's seat **40** in the longitudinal direction. Thereby, the longitudinal weight balance of the vehicle body can be improved.

The drive control portion **93b** is the one to control the longitudinal drive portion **91a,** the front-side lateral drive portion **91b,** and the rear-side lateral drive portion **91c,** and this portion **93b** moves the batteries **B2a, B2b** so that the batteries **B2a, B2b** can be located at the target positions calculated by the calculation portion **93a.** In a case where the batteries **B2a, B2b** are moved in the longitudinal direction, the longitudinal drive portion **91a** is controlled by the drive control portion **93b,** so that the batteries **B2a, B2b** can be moved to the target positions, in the longitudinal direction, thereof. In a case where the front-side battery **B2a** is moved in the lateral direction, the front-side lateral drive portion **91b** is controlled by the drive control portion **93b,** so that the front-side battery **B2a** can be moved to the target position, in the lateral direction, thereof. In a case where the rear-side battery **B2b** is moved in the lateral direction, the rear-side lateral drive portion **91c** is controlled by the drive control portion **93b,** so that the rear-side battery **B2b** can be moved to the target position, in the lateral direction, thereof.

Further, the weight of the batteries **B2a, B2b** can be used for driver's adjustment of the weight balance of the vehicle body. For example, a position adjusting switch (not illustrated) is provided, and when the driver inputs the target positions of the batteries **B2a, B2b** by means of the position adjusting switch, the target positions are set as the target positions of the batteries **B2a, B2b** and then inputted to the drive control portion **93b.** The drive control portion **93b** controls the longitudinal drive portion **91a,** the front-side lateral drive portion **91b,** and the rear-side lateral drive portion **91c** as described above, thereby arranging the batteries **B2a, B2b** at the positions inputted by the driver.

The control unit **93** may indicate the above-described target positions as the best (most appropriate) positions of the batteries **B2a, B2b** on a monitor **200** which is provided in the cabin **R3.** This monitor **200** is disposed at a console or inside a meter panel, for example. The target positions of the batteries **B2a, B2b** which are calculated by the calculation portion **93a** are transformed by the control unit **93** as indication data, and the indication data is outputted to the monitor **200.** Thus, the target positions of the batteries **B2a, B2b** are indicated on the monitor **200,** so that the driver or the like can be informed thereof. The indication manner on the monitor **200** is not limited to this in particular. For example, it may be indicated how far the target positions is from their current positions and in which direction the batteries **B2a, B2b** need to be moved. Alternatively, the distance difference between the target positions and the current positions of the batteries **B2a, B2b** may be indicated.

### (Modification of Battery-Moving Device)

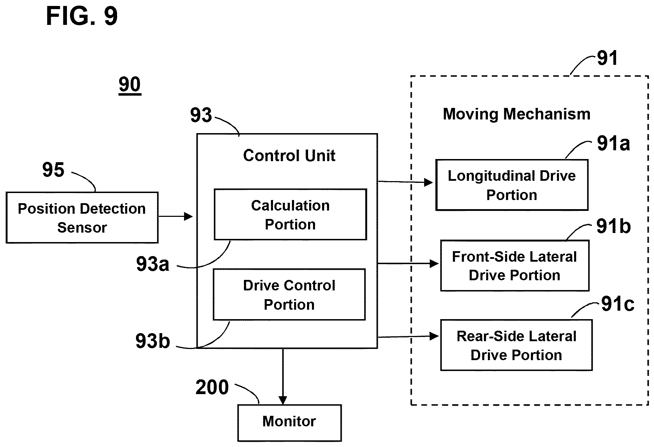

FIG. **9** is a block diagram of a modification of the battery-moving device **90.** In this modification, a position detection sensor **95** (shown in FIG. **3** as well) to detect the position, in the longitudinal direction, of the driver's seat **40** is provided. The position detection sensor **95** can be provided with a slide mechanism **43** or the like, for example, which can obtain the longitudinal position of the driver's seat **40** by detecting a moving quality of the slide mechanism **43** or the like. The calculation portion **93a** calculates the target positions of the batteries **B2a, B2b** based on the position detected by the position detection sensor **95.** The moving mechanism **91** moves the batteries **B2a, B2b** so that these **B2a, B2b** can be arranged at the target positions calculated by the calculation portion **93a.**

### (Effects of Embodiment)

As described above, the vehicle-body structure **A** of the electric automobile **1** according to the present embodiment comprises the assistant-driver's-seat side battery unit **BY2,** and this unit **BY2** is the heavy object because of supplying the electric power to the motor **M.** By moving the assistant-driver's-seat side battery unit **BY2** as the heavy object in the longitudinal direction and/or in the vehicle width direction by means of the battery-moving device **90,** the adjustment of the longitudinal weight balance or the lateral weight balance of the vehicle is enabled. It becomes possible by this adjustment to properly set the weight balance depending on existence or non-existence of the passenger seated in the assistant driver's seat **30,** the weight of the driver seated in the driver's seat **40,** or the like. Moreover, achieving of the driver's own preference regarding the steering characteristics, setting of the weight balance according to the traveling road's condition, or the like become possible as well.

The above-described embodiment just shows an exemplified sample of the present invention, and therefore the present invention should not be construed based on this embodiment. Any modification or change is applicable within the scope of the claims of the present invention. For example, either one of the rear-right side battery unit **BY3** and the rear-left battery unit **BY4** may be provided only. The motor **M** may be disposed on the left side or on the right side of the vehicle body. The motor **M** may be arranged such that its output shaft **M1** extends in the vehicle width direction. The center battery **B1** may be omitted.

Moreover, while the assistant-driver's-seat side battery unit **BY2** is automatically moved by the battery-moving device **90** in the above-described embodiment, the driver may move the assistant-driver's-seat side battery unit **BY2** manually. In this case, an operational member, such as a manual lever, is provided at the battery-moving device **90,** and the assistant-driver's-seat side battery unit **BY2** can be moved in the longitudinal direction and/or in the vehicle width direction by operating this operational member. The assistant-driver's-seat side battery unit **BY2** is fixed after its moving.

Additionally, in a case where the assistant driver's seat **30** is slidable in the longitudinal direction, by connecting the assistant-driver's-seat side battery unit **BY2** to the assistant driver's seat **30,** the assistant-driver's-seat side battery unit **BY2** can be moved in the longitudinal direction together with the assistant driver's seat **30.** Herein, the battery-moving device **90** is configured by the assistant driver's seat **30** which is slidable in the longitudinal direction.

As described above, the present invention is usable for the electric automobile in which the motor for drive and the battery are installed.

## Claims

1. An electric automobile (1), in which a driver's seat (40) and an assistant driver's seat (30) are provided in line in a vehicle width direction, comprising:
an assistant-driver's-seat side battery unit (BY2) installed on a vehicle forward side of the assistant driver's seat (30);
a motor (M) operative to drive a driving wheel (8) when receiving supply of electric power from the assistant-driver's-seat side battery unit (BY2); and
a battery-moving device (90) to move the assistant-driver's-seat side battery unit (BY2) in a vehicle longitudinal direction and/or in the vehicle width direction.

2. The electric automobile (1) of claim 1, further comprising a tunnel portion (11) provided at a central portion, in the vehicle width direction, of a floor panel (10), protruding upward, and extending in the vehicle longitudinal direction and a center battery unit (BY1) installed in said tunnel portion (11) and operative to supply the electric power of said motor (M).

3. The electric automobile (1) of claim 1 or 2, wherein said battery-moving device (90) comprises a load detection sensor (92) to detect a load applied to the driver's seat (40) by a passenger seated in the driver's seat (40), a calculation portion (93a) to calculate a target position of said assistant-driver's-seat side battery unit (BY2) based on the load detected by said load detection sensor (92), and a moving mechanism (91) to move the assistant-driver's-seat side battery unit (BY2) such that the assistant-driver's-seat side battery unit (BY2) is located at the target position calculated by said calculation portion (93a).

4. The electric automobile (1) of anyone of claims 1 to 3, wherein said battery-moving device (90) comprises a position detection sensor (95) to detect a position, in a vehicle longitudinal direction, of the driver's seat (40), a calculation portion (93a) to calculate a target position of said assistant-driver's-seat side battery unit (BY2) based on the position detected by said position detection sensor (92), and a moving mechanism (91) to move the assistant-driver's-seat side battery unit (BY2) such that the assistant-driver's-seat side battery unit (BY2) is located at the target position calculated by said calculation portion (93a).

5. The electric automobile (1) of claim 3 or 4, wherein said moving mechanism (91) comprises at least one rail (100a, 101a, 102a) fixed to a floor panel (10) and extending in the vehicle longitudinal direction or in the vehicle width direction and at least one movable member (100b, 101b, 102b) guided by said at least one fixed rail (100a, 101a, 102a) in a state of engaging with the at least one fixed rail (100a, 101a, 102a), and said assistant-driver's-seat side battery unit (BY2) is attached to said at least one movable member (100b, 101b, 102b).

6. The electric automobile (1) of anyone of claims 1 to 5, wherein an upper-end portion of said assistant-driver's-seat side battery unit (BY2) is located at a lower level than an upper face of a front-end portion of a cushion portion (31) of the assistant driver's seat (30).

7. The electric automobile (1) of claim 2, wherein said floor panel (10) forms a floor face of a cabin (R3), the electric automobile (1) further comprises a dash panel (20) rising from a front-end portion of the floor panel (10) and forming a front wall of the cabin (R3) and an inclined panel (16) extending obliquely upward-and-rearward from a rear-end portion of the floor panel (10), a front-end portion of said tunnel portion (11) is connected to said dash panel (20) and a rear-end portion of said tunnel portion (11) is connected to said inclined panel (16), said motor (M) is provided in the tunnel portion (11) and below the inclined panel (16), said center battery unit (BY1) is installed in the tunnel portion (11) and between the motor (M) and the dash panel (20), said battery-moving device (90) comprises a moving mechanism (91) including at least one rail (100a, 101a, 102a) fixed to the floor panel (10) and extending in the vehicle longitudinal direction or in the vehicle width direction and at least one movable member (100b, 101b, 102b) guided by said at least one fixed rail (100a, 101a, 102a) in a state of engaging with the fixed rail (100a, 101a, 102a), and said assistant-driver's-seat side battery unit (BY2) is attached to said at least one movable member (100b, 101b, 102b).

8. The electric automobile (1) of claim 7, wherein said battery-moving device (90) comprises a load detection sensor (92) to detect a load applied to the driver's seat (40) by a passenger seated in the driver's seat (40), a calculation portion (93a) to calculate a target position of said assistant-driver's-seat side battery unit (BY2) based on the load detected by said load detection sensor (92), and the moving mechanism (91) is configured to move the assistant-driver's-seat side battery unit (BY2) such that the assistant-driver's-seat side battery unit (BY2) is located at the target position calculated by said calculation portion (93a).

9. The electric automobile (1) of claim 7, wherein said battery-moving device (90) comprises a position detection sensor (95) to detect a position, in the vehicle longitudinal direction, of the driver's seat (40), a calculation portion (93a) to calculate a target position of said assistant-driver's-seat side battery unit (BY2) based on the position detected by said position detection sensor (95), and said moving mechanism (91) is configured to move the assistant-driver's-seat side battery unit (BY2) such that the assistant-driver's-seat side battery unit (BY2) is located at the target position calculated by said calculation portion (93a).

10. The electric automobile (1) of anyone of claims 1 to 9, wherein the assistant-driver's-seat side battery unit (BY2) is arranged at a portion of a floor panel (10) which is positioned on the forward side of a cushion portion (31) of the assistant-driver's-seat (30).

11. The electric automobile (1) of claim 10, wherein the assistant-driver's-seat side battery unit (BY2) is configured such that its level in a vertical direction becomes lower from a position starting while going forward.

12. The electric automobile (1) of anyone of claims 3 to 5 or 7 to 9, wherein the moving mechanism comprises a longitudinal drive portion (91a) and/or a lateral drive portion (91b, 91c) to move the assistant-driver's-seat side battery unit (BY2) in a vehicle longitudinal direction and/or in the vehicle width direction, said drive portion preferably being a direct-move actuator, such as an electromotive screw mechanism.

13. The electric automobile (1) of claims 3 or 8, wherein said calculation portion is configured to calculate a target position such that the larger the load detected by the load detection sensor (92) is, the further the target positions of the assistant-driver's-seat side battery unit (BY2) is away from the driver's seat (40) in the lateral direction and/or the longitudinal direction of the automobile (1).

14. The electric automobile (1) of anyone of claims 1 to 13, wherein the battery-moving device (90) comprises a position adjusting switch by which a driver is able to input a desired target position of the assistant-driver's-seat side battery unit (BY2), the battery-moving device (90) further comprising a moving mechanism (91) adapted to move the assistant-driver's-seat side battery unit (BY2) such that the assistant-driver's-seat side battery unit (BY2) is located at the desired target position inputted by the driver.
